# EUROPEAN PATENT SPECIFICATION

(11) **EP 0 932 231 B1**
(45) Date of publication and mention of the grant of the patent: **05.06.2002**
(21) Application number: 99200215.4
(22) Date of filing: 26.01.1999
(51) Int. Cl.: H02B 1/20, H02G 3/30

(54) **Supporting bracket for raceways particularly for electrical distribution cubicles**
Tragkonsole für Leitungskanäle, insbesondere für elektrische Schaltschränke
Support pour chemin de cables, notamment pour armoires de distribution électriques

(30) Priority: 26.01.1998 IT MI980134
(43) Date of publication of application: 28.07.1999
(73) Proprietor: ABB Sace SpA, 20137 Milano (IT)
(72) Inventor: Fontana, Rodolfo, 21050 Clivio (VA) (IT); Corbetta, Livio, 23862 Civate (LC) (IT)
(74) Representative: Giavarini, Francesco

(56) References cited:
- EP-A- 0 109 881
- FR-A- 2 564 256

## Description

The present invention relates to a supporting bracket for raceways, particularly for electrical distribution cubicles.

It is known that electrical distribution cubicles are meant to form electrical panels with a predominant presence of enclosed switches and with internal segregation elements. The cubicles are specifically designed and manufactured so as to meet the requirements of distribution panels and accordingly allow to optimize the installation of open and enclosed switches.

Said cubicles generally have a structure which is shaped like a parallelepiped and inside which there are provided distribution bars arranged in various configurations as well as structures for fixing omega-shaped bars to which the switches are applied.

The wiring of the wires from the distribution bars to the switches and from the switches to the various users must be performed by wiring technicians so as to provide a panel which is as tidy as possible as regards the visual presence of wires.

Raceways are provided for this purpose which are accommodated both vertically, at the vertical uprights of the structure of the distribution cubicle, and horizontally, so as to allow the wires to pass from the distribution bars to the switches and from the switches to the various users, thus keeping the electrical panel inside the cubicle free from visible wires.

Vertical raceways are fixed by accommodating them, as mentioned, within the vertical uprights of the structure of the cubicle.

Fixing the horizontal raceways instead entails considerable difficulties, since it is necessary to provide either a supporting panel, with which said raceways engage, or C-shaped brackets adapted to connect the horizontal raceway to a corresponding omega-shaped bar to which the switches are attached.

This type of installation entails, in both cases, a wiring complexity which must be dealt with by the installation technician as well as an unwanted space occupation inside the distribution cubicle.

These wiring difficulties are very evident when the distribution cubicle is of the wall-mounted type, i.e., when rear access is prevented.

An example of a known supporting bracket is given in the European patent application EP0109881 which relates to a profiled rail for supporting electrical apparatus.

The aim of the present invention is to provide a supporting bracket for raceways, particularly for electrical distribution cubicles, in which the wiring technician can easily align the vertical raceways and the horizontal raceways.

Within the scope of this aim, an object of the present invention is to provide a supporting bracket for raceways, particularly for electrical distribution cubicles, in which the same supporting bracket is suitable for raceways of different sizes.

Another object of the present invention is to provide a supporting bracket for raceways, particularly for electrical distribution cubicles, which allows alignment between vertical raceways and horizontal raceways even if they have different dimensions.

Another object of the present invention is to provide a supporting bracket for raceways, particularly for electrical distribution cubicles, by means of which it is possible to reduce the space occupied inside the cubicle.

Another object of the present invention is to provide a supporting bracket for raceways, particularly for electrical distribution cubicles, which is highly reliable, relatively easy to manufacture and at competitive costs.

This aim, these objects and others which will become apparent hereinafter are achieved by a supporting bracket for raceways, particularly for electrical distribution cubicles, comprising a first portion which is meant to be connected to a vertical upright of a distribution cubicle, a second portion, which is integral to the first portion and is arranged substantially at right angles thereto and is provided with a pair of fingers, and a third portion which is integral to said second portion and is arranged at the base of said fingers substantially parallel to the first portion, characterized in that said first portion faces said third portion in a manner that between said first portion, second portion and third portion a space is provided to accommodate a vertical raceway, the fingers being provided with means to allow the connection of said horizontal raceway to the supporting bracket in a manner such that said horizontal raceway is aligned with said vertical raceway.

Further characteristics and advantages of the present invention will become apparent from the following detailed description of a preferred but not exclusive embodiment of the supporting bracket according to the invention, illustrated only by way of non-limitative example in the accompanying drawings, wherein:

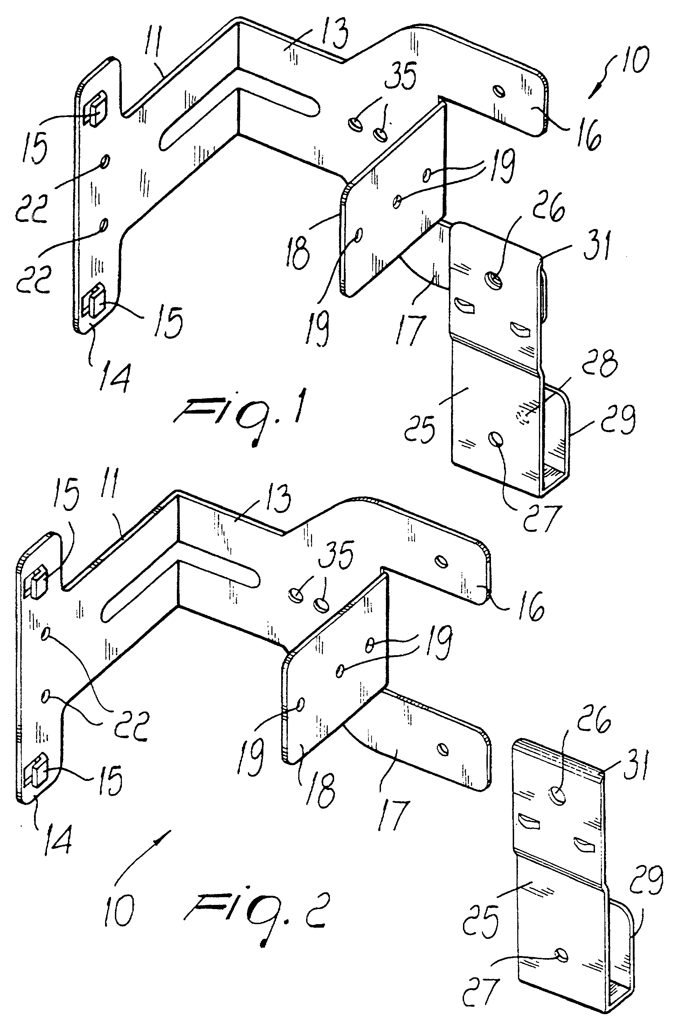

Figure 1 is a perspective view of the bracket according to the present invention;
Figure 2 is an exploded perspective view of the bracket according to the present invention;

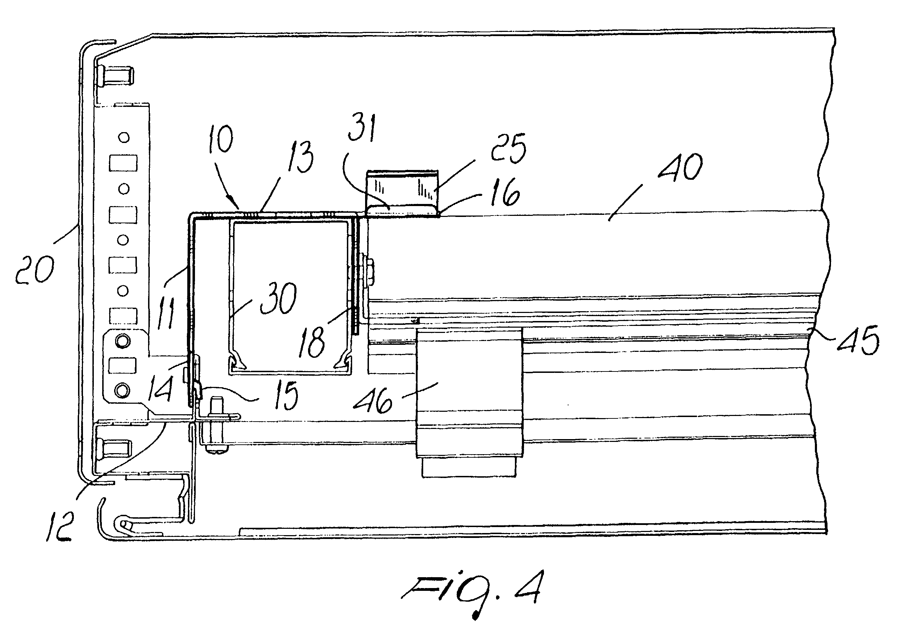

Figure 3 is a perspective view of the bracket, shown connected to a vertical upright of a distribution cubicle, with a vertical raceway fixed thereto; and
Figure 4 is a partial plan view of the bracket according to the present invention, shown located in the distribution cubicle with the corresponding vertical and horizontal raceways connected thereto.

With reference to the above figures, the supporting bracket according to the present invention, generally designated by the reference numeral 10, comprises a first portion 11 which is meant to be connected to one of the vertical uprights of the cubicle, designated by the reference numeral 12 in Figure 4.

A second portion 13 is connected, substantially at right angles, to the first portion 11.

The first portion 11 is substantially T-shaped and the transverse part of said T-shape, designated by the reference numeral 14, is provided with a pair of engagement teeth 15 which allow to engage the bracket 10 with the vertical upright 12 of the distribution cubicle, which is designated by the reference numeral 20.

Two holes 22 are provided at the transverse portion of the T-shape for connection to the vertical upright 12.

The second portion 13 is Y-shaped, with fingers designated by the reference numerals 16 and 17 respectively; a third portion 18 is connected at right angles to the second portion 13 and is arranged at the base of the fingers 16 and 17, substantially parallel to the first portion 11.

The third portion 18 is conveniently provided with holes 19 to allow the connection of an omega-shaped bar 45, to which the various switches are attached. The fingers 16 and 17 allow to connect an engagement plate 25, which is constituted by a plate-like element provided with two holes 26 and 27; the first hole is provided for engagement with one of the fingers 16 and 17 and the second hole is provided for the engagement of a horizontal raceway 40. The plate-like element is further provided with a U-shaped end portion, and an additional hole 28 which faces the hole 27 is provided; the hole 28 is arranged in the portion designated by the reference numeral 29.

The plate-like element that constitutes the plate 25 is further provided with a protruding upper edge 31 which allows engagement at the upper profile of one of the fingers 16 and 17.

The first, second and third portions of the bracket 10 are formed monolithically and are made for example of metal.

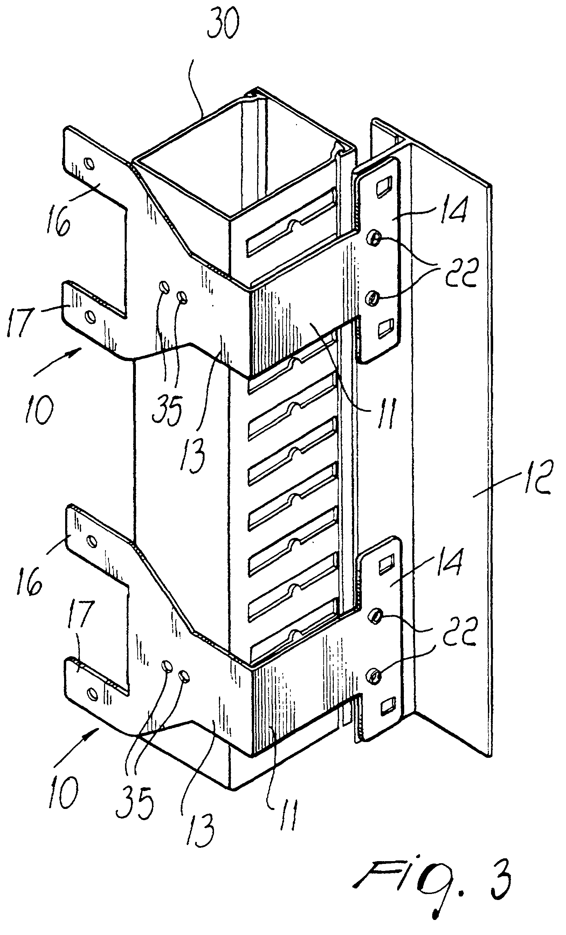

The plate 25 can be connected to the fingers 16 and 17 as shown in Figure 2, i.e., so that the hole 27 is directed toward the horizontal raceway 40, or rotated through 180°, i.e., so that the hole 28 is directed toward the raceway. In this case, the fitting of the horizontal raceway 40 is different, as explained in detail hereinafter.

The fitting of the supporting bracket 10 in the distribution cubicle 20 with the raceways 30 and 40 mutually aligned at the front and at the rear is now described with reference in particular to Figure 4.

In particular, Figure 4 also shows the bar having an omega-shaped cross-section. designated by the reference numeral 45, to which the various switches are attached; only one switch, designated by the reference numeral 46, is shown in the figure, and said switches are meant to be accommodated in the distribution cubicle 20.

In the case shown in Figure 4, the plate 25 is arranged as shown in Figure 2, since the horizontal raceway 40 has the same dimensions as the vertical raceway 30 and therefore the positioning of the two raceways entails no alignment problems.

If instead one wishes to use a horizontal raceway 40 having smaller dimensions, owing to the presence of a limited number of switches 46 or because the switches have different dimensions or differently arranged wire insertion points, it is then necessary to use the plate 25 by connecting it after turning through 180° with respect to the condition shown in Figure 2.

In this case, the raceway 40 is connected at the hole 28 of the plate 25 and thus spaced with respect to the plane on which the fingers 16 and 17 of the second portion 13 of the supporting bracket 10 are arranged.

In this manner, the forward movement of the raceway 40 with respect to the plane of the second portion 13 allows to align said raceway with the vertical raceway 30 despite the smaller dimensions of the former.

The holes 19 provided in the third portion allow to connect the omega-shaped bar 45, to which a switch 46 is attached, both in the normal position and after turning it through 180°.

In this case, if the bar 45 is connected in a different way, i.e., rotated through 180°, the position of the switches 46 is different, accordingly requiring the use of raceways 40 having different dimensions.

Use of the bracket according to the invention therefore allows to adapt, with the same bracket, different types of horizontal raceway 40 so as to align them in an optimum manner with the conventional vertical raceway 30.

Holes 35 formed in the second portion 13 allow to connect the vertical raceway 30 to the bracket 10.

In practice it has been observed that the bracket according to the present invention fully achieves the intended aim and objects, since it allows to connect, in a simple and optimum manner, the horizontal raceway so that it is always aligned with the vertical raceway, regardless of the dimensions of the horizontal raceway.

Moreover, the bracket according to the invention allows to arrange switches of different dimensions at the horizontal raceway without having to change the bracket, accordingly entailing both a cost saving and a time saving for the installation technician.

The particular T-shaped configuration of the first portion of the bracket, which is meant to be connected to the upright of the distribution cubicle, allows to leave exposed the largest possible portion of vertical raceway so as to allow easy passage of the wires.

Two supporting brackets executed according to the invention are of course provided for each omega-shaped bar with the corresponding switches attached thereto and are arranged at the ends of the bar; an end of the horizontal raceway related to said omega-shaped bar is connected to each one of said brackets.

The bracket thus conceived is susceptible of numerous modifications and variations, all of which are within the scope of the inventive concept; all the details may also be replaced with other technically equivalent elements.

In practice, the materials employed, so long as they are compatible with the specific use, as well as the dimensions, may be any according to requirements and to the state of the art.

## Claims

1. A supporting bracket (10) for raceways (30, 40), particularly for electrical distribution cubicles (20), comprising a first portion (11) which is meant to be connected to a vertical upright (12) of a distribution cubicle (20), a second portion (13), which is integral to the first portion (11) and is arranged substantially at right angles thereto and is provided with a pair of fingers (16, 17), and a third portion (18) which is integral to said second portion (13) and is arranged at the base of said fingers (16, 17) substantially parallel to the first portion (11), **characterized in that** said first portion (11) faces said third portion (18) in a manner that between said first portion (11), second portion (13) and third portion (18) a space is provided to accommodate a vertical raceway (30), the fingers (16, 17) being provided with means to allow the connection of said horizontal raceway (40) to the supporting bracket (10) in a manner such that said horizontal raceway (40) is aligned with said vertical raceway (30).

2. A supporting bracket (10) according to claim 1, **characterized in that** said means to allow the connection of said horizontal raceway (40) to the supporting bracket (10) comprise a plate (25) which is adapted to be connected to one of the fingers (16, 17) of said second portion (13).

3. A supporting bracket (10) according to claim 1, **characterized in that** said first portion (11) is substantially T-shaped and is provided with a pair of holes (22) for connection to said vertical upright (12).

4. A supporting bracket (10) according to claim 1, **characterized in that** said second portion (13) is substantially Y-shaped, two holes (35) being provided in said second portion (13) in order to fix said vertical raceway (30).

5. A supporting bracket (10) according to claim 1, **characterized in that** said third portion (18) comprises a plurality of holes (19) for connecting one end of a bar (45) for supporting a plurality of switches (46).

6. A supporting bracket (10) according to claim 2, **characterized in that** each one of said fingers (16, 17) comprises at least one hole for the connection of said plate (25).

7. A supporting bracket (10) according to claim 2, **characterized in that** said plate (25) comprises a plate-like element which ends, at one end, with a substantially U-shaped configuration, two holes (27, 28) being provided at said end for the connection of said horizontal raceway (40).

8. A supporting bracket (10) according to claim 1, **characterized in that** said first, second and third portions (11, 13, 18) are formed monolithically.

9. A supporting bracket (10) according to claim 7, **characterized in that** said plate (25) comprises, at an upper edge lying opposite the U-shaped end, a protruding edge (31) which is suitable to engage the upper profile of said fingers (16, 17).

10. A supporting bracket (10) according to claim 1, **characterized in that** said first portion (11) comprises two engagement teeth (15) which allow the engagement of said bracket (10) to said vertical upright (12) of the distribution cubicle (20).

## Patentansprüche

1. Tragkonsole (10) für Leitungskanäle ( 30, 40), insbesondere für elektrische Verteilerschaltschränke (20), mit einem ersten Teil (11), der an einer vertikalen Stütze (12) eines Verteilerschaltschranks (20) anzubringen ist, einem zweiten Teil (13), der fest mit dem ersten Teil (11) zusammenhängt und im wesentlich rechtwinklig zu diesem angeordnet ist und ein Paar Finger (16, 17) hat, und einem dritten Teil (18), der fest mit dem zweiten Teil (13) zusammenhängt und an der Basis der Finger (16, 17) im wesentlichen parallel zu dem ersten Teil (11) angeordnet ist, **dadurch gekennzeichnet, daß** der erste Teil (11) dem dritten Teil (18) derart gegenübersteht, daß zwischen dem ersten Teil (11), dem zweiten Teil (13) und dem dritten Teil (18) ein Raum zum Aufnehmen eines vertikalen Leitungskanals (30) gebildet ist, wobei die Finger (16, 17) Mittel haben, die das Anbringen des horizontalen Leitungskanals (40) an der Tragkonsole (10) in einer Art und Weise ermöglichen, daß der horizontale Leitungskanal (40) mit dem vertikalen Leitungskanal (30) ausgerichtet ist.

2. Tragkonsole (10) nach Anspruch 1, **dadurch gekennzeichnet, daß** die Mittel, die das Anbringen des horizontalen Leitungskanals (40) an der Tragkonsole (10) ermöglichen, eine Platte (25) enthalten, die geeignet ist, an einem der Finger (16, 17) des zweiten Teils (13) befestigt zu werden.

3. Tragkonsole (10) nach Anspruch 1, **dadurch gekennzeichnet, daß** der erste Teil im wesentlichen T-förmig ist und ein Paar Löcher (22) zum Befestigen an der vertikalen Stütze (12) hat.

4. Tragkonsole (10) nach Anspruch 1, **dadurch gekennzeichnet, daß** der zweite Teil (13) im wesentlichen Y-förmig ist, wobei in dem zweiten Teil (13) zwei Löcher (35) zum Anbringen des vertikalen Leitungskanals (30) vorgesehen sind.

5. Tragkonsole (10) nach Anspruch 1, **dadurch gekennzeichnet, daß** der dritte Teil (18) mehrere Löcher (19) zum Befestigen eines Endes einer Schiene (45) zum Tragen mehrerer Schalter (46) hat.

6. Tragkonsole (10) nach Anspruch 2, **dadurch gekennzeichnet, daß** jeder der Finger (16, 17) zumindest ein Loch zum Anbringen der Platte (25) hat.

7. Tragkonsole (10) nach Anspruch 2, **dadurch gekennzeichnet, daß** die Platte (25) ein plattenförmiges Element umfaßt, das an einem Ende in einer im wesentlichen U-förmigen Konfiguration endet, wobei zwei Löcher (27, 28) zum Anbringen des horizontalen Leitungskanals (40) an dem Ende vorgesehen sind.

8. Tragkonsole (10) nach Anspruch 1, **dadurch gekennzeichnet, daß** der erste, der zweite und der dritte Teil (11, 13, 18) monolithisch ausgebildet sind.

9. Tragkonsole (10) nach Anspruch 7, **dadurch gekennzeichnet, daß** die Platte (25) an einer dem U-förmigen Ende abgewandten oberen Kante eine hervorstehende Kante (31) hat, die geeignet ist, mit dem oberen Profil der Finger (16, 17) in Eingriff zu treten.

10. Tragkonsole (10) nach Anspruch 1, **dadurch gekennzeichnet, daß** der erste Teil (11) zwei Eingriffszähne (15) hat, die das Anbringen der Konsole (10) an der vertikalen Stütze (12) des Verteilerschaltschranks (20) ermöglichen.

## Revendications

1. Ferrure de support (10) pour chemins (30, 40) de câbles, en particulier pour des armoires (20) de distribution électrique, comprenant une première partie (11) destinée à être montée sur un montant vertical (12) d'une armoire de distribution (20), une deuxième partie (13), qui fait corps avec la première partie (11) et est disposée sensiblement perpendiculairement à celle-ci et est pourvue d'une paire de doigts (16, 17), et une troisième partie (18) qui fait corps avec ladite deuxième partie (13) et est disposée à la base desdits doigts (16, 17) sensiblement parallèlement à la première partie (11), **caractérisée en ce que** ladite première partie (11) est en regard de ladite troisième partie (18) de façon qu'entre lesdites première partie (11), deuxième partie (13) et troisième partie (18) soit ménagé un espace pour recevoir un chemin de câbles vertical (30), les doigts (16, 17) étant pourvus de moyens pour permettre le montage dudit chemin de câbles horizontal (40) sur la ferrure de support (10) de façon que ledit chemin de câble horizontal (40) soit aligné avec ledit chemin de câbles vertical (30).

2. Ferrure de support (10) selon la revendication 1, **caractérisée en ce que** lesdits moyens destinés à permettre le montage dudit chemin de câbles horizontal (40) sur la ferrure de support (10) comportent une plaque (25) apte à être montée sur un des doigts (16, 17) de ladite deuxième partie (13).

3. Ferrure de support (10) selon la revendication 1, **caractérisée en ce que** ladite première partie (11) est sensiblement en forme de T et comporte une paire de trous (22) pour le montage de celle-ci sur ledit montant vertical (12).

4. Ferrure de support (10) selon la revendication 1, **caractérisée en ce que** ladite deuxième partie (13) est sensiblement en forme de Y, deux trous (35) étant ménagés dans ladite deuxième partie (13) afin de fixer ledit chemin de câbles vertical (30).

5. Ferrure de support (10) selon la revendication 1, **caractérisée en ce que** ladite troisième partie (18) comporte une pluralité de trous (19) servant à monter une extrémité d'une barre (45) destinée à supporter une pluralité de commutateurs (46).

6. Ferrure de support (10) selon la revendication 2, **caractérisée en ce que** chacun desdits doigts (16, 17) comporte au moins un trou pour le montage de ladite plaque (25).

7. Ferrure de support (10) selon la revendication 2, **caractérisée en ce que** ladite plaque (25) comporte un élément analogue à une plaque qui, à une extrémité, se termine par une configuration sensiblement en forme de U, deux trous (27, 28) étant ménagés à ladite extrémité pour le montage dudit chemin de câbles horizontal (40).

8. Ferrure de support (10) selon la revendication 1, **caractérisée en ce que** lesdites première, deuxième et troisième parties (11, 13, 18) sont formées de manière monolithique.

9. Ferrure de support (10) selon la revendication 7, **caractérisée en ce que** ladite plaque (25) comporte, sur un bord supérieur situé à l'opposé de l'extrémité en forme de U, une arête saillante (31) conçue pour s'engager sur le profil supérieur desdits doigts (16, 17).

10. Ferrure de support (10) selon la revendication 1, **caractérisée en ce que** ladite première partie (11) comporte deux dents d'engagement (15) qui permettent l'engagement de ladite ferrure (10) avec ledit montant vertical (12) de l'armoire de distribution (20).
